# DEMANDE DE BREVET EUROPEEN

(11) **EP 1 126 702 A1**
(43) Date de publication de la demande: **22.08.2001**
(21) Numéro de dépôt: 01400286.9
(22) Date de dépôt: 06.02.2001
(51) Int. Cl.: H04N 5/57

(54) **Procédé et dispositif de réglage de couleur d'un moniteur couleur**

(30) Priorité: 15.02.2000 FR 0001817
(71) Demandeur: STMicroelectronics SA, 94250 Gentilly Cedex (FR)
(72) Inventeur: Blanc, Jean-Pierre, 38570 Theys (FR)
(74) Mandataire: Casalonga, Axel

(57) **Abrégé**

Le procédé est destiné au réglage de couleur d'un moniteur couleur pourvu d'un tube cathodique et d'un moyen de réglage de la brillance. Selon le procédé, on envoie un signal de brillance nominal en aval d'un moyen de réglage de niveau de blanc et en amont d'un moyen de réglage de niveau de noir, on ajuste la tension nécessaire pour obtenir une image de couleur noire, on ajuste la tension nécessaire pour obtenir une image de couleur blanche, on envoie ledit signal de brillance nominal en amont dudit moyen de réglage de niveau de blanc, et on ajuste la tension nécessaire pour obtenir une image de couleur noire.

## Description

La présente invention concerne le domaine des moniteurs ou écrans vidéo couleur, notamment pour ordinateurs.

Chaque image visible sur un moniteur couleur est composée de trois informations de couleur : rouge, vert et bleu.

Dans le cas d'un moniteur couleur associé à un ordinateur, ces trois informations de couleur proviennent dudit ordinateur et sont envoyées sur un pré-amplificateur en vue d'être ajustées et contrôlées, puis sur un amplificateur en vue d'être amplifiées et enfin dirigées vers les trois cathodes du tube cathodique du moniteur. Le pré-amplificateur et l'amplificateur sont en général disposés dans le même bâti que le tube cathodique.

L'étalonnage final du moniteur en usine comprend deux réglages fondamentaux, qui sont :
- le réglage de noir également appelé réglage de "CUT OFF" en langue anglaise, qui consiste à ajuster pour chaque voie, c'est-à-dire pour chaque couleur, à la sortie de l'amplificateur ou du pré-amplificateur, la tension nécessaire pour avoir une image de couleur noire,
- le réglage de blanc également appelé réglage de "DRIVE" en langue anglaise, qui consiste à régler pour chaque voie, à la sortie du pré-amplificateur, la tension nécessaire pour avoir une image de couleur blanche. Le blanc nominal que l'on veut obtenir à l'écran contient une proportion définie des trois couleurs de base, rouge, vert et bleu, et est mesuré par un appareil adéquat, du type caméra couleur, disposé devant le moniteur.

Le comportement du tube cathodique n'est pas identique pour les trois voies, et les deux réglages précités ont pour but de compenser les différences du tube d'une voie à l'autre. De plus, le comportement d'une voie donnée varie d'un tube à l'autre, ce qui nécessite un réglage individuel en sortie de chaîne de fabrication.

L'utilisateur du moniteur bénéficie d'un réglage dit de "brillance", qui lui permet d'ajuster le niveau de luminosité de l'écran en fonction de l'éclairage ambiant ou du contenu de l'image à visualiser. Le réglage de brillance est effectué, soit grâce à une molette disposée sur le bâti du moniteur, soit en cliquant sur un menu de réglage de brillance au moyen de la souris de l'ordinateur ou de tout moyen équivalent.

Actuellement, deux architectures d'amplificateur et de pré-amplificateur sont connues.

La première, simple et économique, consiste à avoir dans le pré-amplificateur un réglage de brillance situé après le réglage de blanc. La tension correspondant à l'information de brillance qui est la même pour les trois voies, n'est pas affectée par le réglage de blanc. Il en résulte que la proportionnalité entre les trois voies qui est ajustée par le réglage de blanc et qui est effectuée pour une valeur nominale du réglage de brillance, ne sera pas conservée lorsque le réglage de brillance sera modifié par l'utilisateur. Il en résulte une modification des caractéristiques de la couleur blanche lorsque la brillance est ajustée par l'utilisateur. Cette architecture présente une procédure de réglage en usine facile à mettre en oeuvre car les deux réglages de noir et de blanc sont indépendants. La qualité de l'image n'est toutefois pas entièrement satisfaisante.

La deuxième architecture connue consiste à disposer dans le pré-amplificateur un réglage de brillance situé avant le réglage de blanc. Ainsi, la tension correspondant à l'information de brillance est modifiée par le réglage de blanc et la proportionnalité entre les trois voies est maintenue quelle que soit la valeur du réglage de brillance. Il en résulte pour l'utilisateur un meilleur confort visuel, puisque la couleur blanche d'origine établie pour un signal de brillance nominal sera toujours conservée.

Cette architecture a malheureusement l'inconvénient d'être difficile à mettre en oeuvre lors du réglage d'usine, car le réglage initial du noir est modifié par le réglage du blanc. Par conséquent, le réglage du noir doit être repris une fois le réglage du blanc effectué et ainsi de suite. Le réglage définitif est obtenu au bout de plusieurs itérations, ce qui se traduit par une perte de temps non négligeable lors de la mise au point en usine, perte de temps de l'ordre d'une dizaine de secondes. Il en résulte un accroissement des coûts de fabrication et une complexité accrue de la chaîne de fabrication.

La présente invention a pour objet de proposer un procédé et un dispositif de réglage de couleur économique, simple, permettant de fournir une image de haute qualité.

Le procédé, selon l'invention, est destiné au réglage de couleur d'un moniteur couleur pourvu d'un tube cathodique et d'un moyen de réglage de la brillance, procédé dans lequel on envoie un signal de brillance nominal en aval d'un moyen de réglage de niveau de blanc et en amont d'un moyen de réglage de niveau de noir, on ajuste la tension nécessaire pour obtenir une image de couleur noire, on ajuste la tension nécessaire pour obtenir une image de couleur blanche, on envoie ledit signal de brillance nominal en amont dudit moyen de réglage de niveau de blanc, et on ajuste la tension nécessaire pour obtenir une image de couleur noire.

De préférence, le tube cathodique étant pourvu d'une pluralité de voies, on procède auxdits ajustements pour chacune des voies.

Dans un mode de réalisation de l'invention, l'ajustement de tension nécessaire pour obtenir une image de couleur noire est effectué à la sortie d'un amplificateur faisant partie du moniteur.

Dans un autre mode de réalisation de l'invention, l'ajustement de tension nécessaire pour obtenir une image de couleur noire est effectué à la sortie d'un pré-amplificateur faisant partie du moniteur.

Dans un mode de réalisation de l'invention, l'ajustement de tension nécessaire pour obtenir une image de couleur blanche est effectué à la sortie d'un pré-amplificateur faisant partie du moniteur.

De préférence, on mesure la couleur de l'image.

L'invention a également pour objet un dispositif de réglage de couleur d'un moniteur couleur pourvu d'un tube cathodique, comprenant un moyen de réglage de la brillance, un moyen pour ajuster la tension nécessaire pour obtenir une image de couleur noire et un moyen pour ajuster la tension nécessaire pour obtenir une image de couleur blanche. Le dispositif comprend un moyen de réglage de la brillance en amont du moyen pour ajuster la tension nécessaire pour obtenir une image de couleur blanche et un moyen de réglage de la brillance en aval du moyen pour ajuster la tension nécessaire pour obtenir une image de couleur blanche.

Avantageusement, le dispositif comprend un unique moyen de réglage de la brillance apte à être actif alternativement en amont et en aval du moyen pour ajuster la tension nécessaire pour obtenir une image de couleur blanche.

Avantageusement, le dispositif comprend un moyen de commutation disposé à une sortie du moyen de réglage de la brillance et capable de relier ladite sortie du moyen de réglage de la brillance alternativement à une entrée et à une sortie du moyen pour ajuster la tension nécessaire pour obtenir une image de couleur blanche.

L'invention a également pour objet un moniteur comprenant un dispositif de réglage tel que décrit ci-dessus.

Grâce à l'invention, les étapes d'étalonnage d'un moniteur couleur en fin de chaîne de fabrication ont une durée d'environ 1 à 2 secondes comparable à la durée de réglage obtenue avec la première architecture de l'art antérieur et ce tout en conservant le réglage initial de couleur blanche, quelle que soit la brillance sélectionnée par un utilisateur du moniteur.

L'invention permet donc d'obtenir les avantages de chacune des architectures de l'art antérieur sans pâtir de leurs inconvénients respectifs. De plus, l'architecture d'amplification vidéo conforme à l'invention reste simple, dans la mesure où on ajoute juste un moyen de commutation qui est commun pour les trois voies. Le dispositif de réglage obtenu est donc simple et relativement économique.

La présente invention sera mieux comprise et d'autres avantages apparaîtront à la lecture de la description détaillée d'un mode de réalisation pris à titre d'exemple nullement limitatif et illustré par les dessins annexés, sur lesquels :
- la figure 1 est une vue schématique de l'architecture générale d'un ordinateur équipé d'un moniteur couleur;
- la figure 2 est une vue schématique d'un dispositif de réglage conforme à l'invention;
- la figure 3 montre un signal vidéo lors d'une première étape d'un procédé selon un mode de réalisation de l'invention;
- la figure 4 montre un signal vidéo lors d'une deuxième étape du même procédé; et
- la figure 5 montre un signal vidéo lors d'une troisième étape du même procédé.

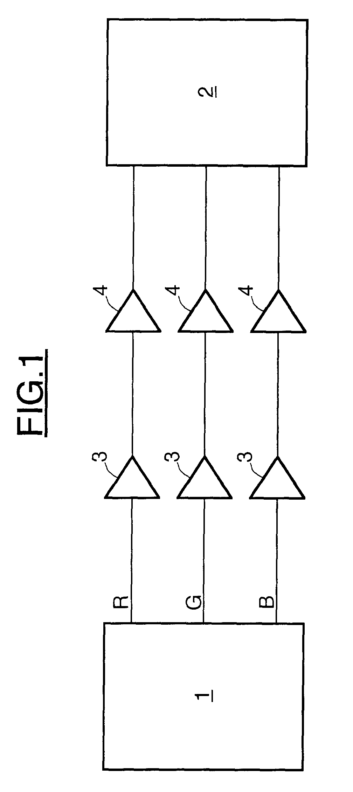

Comme on peut le voir sur la figure 1, un micro-ordinateur 1 est relié à un moniteur couleur 2 par trois voies qui sont classiquement désignées par les lettres R, G, B, chaque voie correspondant à une couleur, rouge, vert et bleu. Sur chacune des voies R, G, B, sont disposés un pré-amplificateur 3 et un amplificateur 4. A titre d'exemple, le pré-amplificateur 3 peut avoir un gain de l'ordre de 6 à 8 qui est réglable et être alimenté par une tension continue, en général comprise entre 8 et 12 volts. Chaque amplificateur 4 possède une entrée connectée à la sortie du pré-amplificateur 3 de la voie correspondante et une sortie reliée à une cathode correspondante du moniteur 2. L'amplificateur 4 est alimenté par une tension continue, généralement comprise entre 80 et 120 volts.

De façon non représentée sur la figure 1, les pré-amplificateurs 3 et les amplificateurs 4 sont pourvus d'autres entrées qui permettent les étalonnages nécessaires compte tenu de la dispersion de fabrication des moniteurs et, pour un moniteur donné, de chacune de ses cathodes. Ces étalonnages permettent d'obtenir un niveau de noir et un niveau de blanc de référence sur le moniteur 2. D'autres entrées pour le réglage du contraste et de la brillance sont également prévues. Le contraste et la brillance sont en général réglés par l'utilisateur lui-même et sont communs aux trois voies. Au contraire, les réglages de niveau de noir et de niveau de blanc doivent être adaptés à chaque voie.

Sur la figure 1, on a représenté un pré-amplificateur 3 par voie et un amplificateur 4 par voie. Toutefois, on aurait pu également représenter un unique pré-amplificateur commun à trois voies à trois entrées et trois sorties et un unique amplificateur commun à trois voies avec trois entrées et trois sorties autres que les entrées d'étalonnage ou de réglage citées ci-dessus.

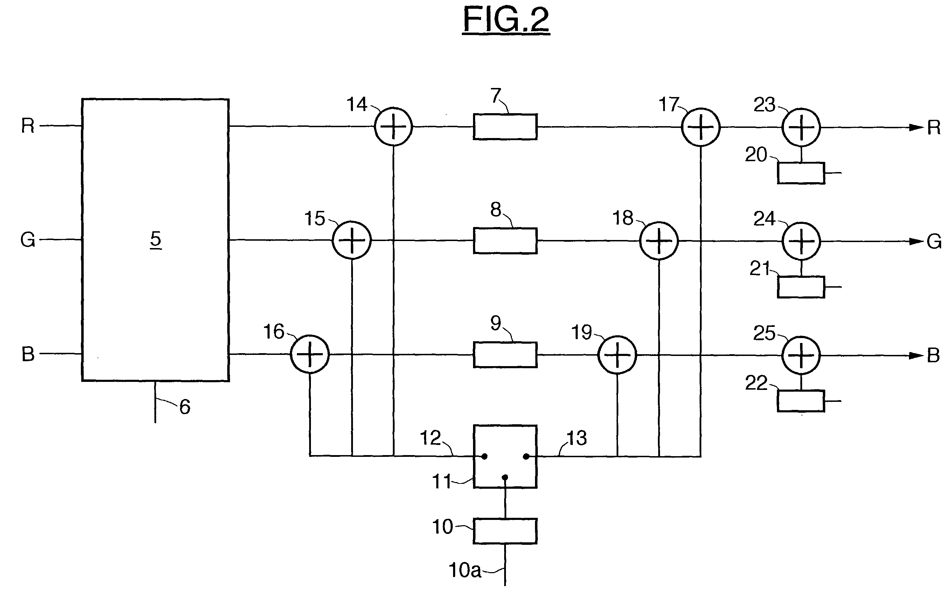

Comme on peut le voir sur la figure 2, les signaux des trois voies R, G, B en sortie d'un ordinateur sont envoyés vers un module de contraste 5, commun auxdites trois voies, et pourvu d'une entrée de commande 6 apte à recevoir un signal de commande en provenance d'un moyen de commande qui élabore ledit signal, de façon matérielle, par exemple au moyen d'un bouton de réglage de contraste, non représenté, à la disposition de l'utilisateur, ou de façon logicielle avec une icône de réglage de contraste qui peut être pointée au moyen d'une souris.

A la sortie du module de contraste 5, chaque voie R, G, B est envoyée vers un module de réglage de blanc correspondant, référencé 7, 8 et 9.

Un module de réglage de brillance 10 est pourvu d'une entrée de commande 10a, qui peut être commandée de façon analogue au module de contraste 5. La sortie du module de brillance 10 est reliée à un commutateur 11, de préférence réalisé de façon intégrée et pourvu de deux sorties référencées 12 et 13. Le commutateur 11 est apte à relier électriquement la sortie du module de brillance 10, soit avec sa sortie 12, soit avec sa sortie 13. Le commutateur 11 est également pourvu d'une entrée de commande, non représentée, de façon qu'il puisse recevoir un signal de commande déterminant la liaison électrique qu'il réalise.

La sortie 12 du commutateur 11 est reliée en parallèle à trois additionneurs 14, 15 et 16, disposés respectivement sur les voies R, G et B, entre le module de contraste 5 et respectivement les modules de réglage de blanc 7, 8 et 9. De façon similaire, la sortie 13 du commutateur 11 est reliée de façon parallèle à trois additionneurs 17, 18 et 19, disposés respectivement sur les voies R, G et B, en sortie respectivement des modules de réglage de blanc 7, 8 et 9.

Il est encore prévu trois modules de réglage de noir, un par voie, référencés 20, 21 et 22, chacun prouvu d'une entrée de commande et d'une sortie, les sorties étant reliées respectivement à des additionneurs 23, 24 et 25, disposés respectivement sur les voies R, G et B, en aval des additionneurs 17, 18 et 19. Les sorties des additionneurs 23, 24 et 25 sont reliées, soit directement aux cathodes d'un moniteur 2 ou, soit aux amplificateurs 4 d'un moniteur 2, voir figure 1. En effet, les modules de réglage de noir 20 à 22 peuvent faire partie, soit d'un pré-amplificateur, soit d'un amplificateur. Généralement, les modules de réglage de blanc 7 à 9 font partie d'un pré-amplificateur.

Le fonctionnement d'un tel dispositif s'effectue comme suit. A la sortie d'une chaîne de fabrication, en usine, l'étalonnage s'effectue en commandant le commutateur 11 de façon qu'il relie la sortie du module de brillance 10 à sa sortie 13. Ainsi, le signal de brillance est injecté en aval des modules de blanc 7 à 9. On effectue alors un étalonnage du niveau de noir au moyen des modules de réglage de noir 20 à 22, et ce pour des niveaux de contraste et de brillance nominaux prédéterminés. Lors de cet étalonnage, le moniteur est bien entendu allumé et surveillé au moyen d'une caméra couleur, non représentée, qui permet de mesurer les différentes composantes de couleur affichées à l'écran. On ajuste donc pour chaque voie une tension continue que l'on injecte en plus, au moyen des additionneurs 23 à 25 sur chaque voie R, G et B, de façon qu'un niveau nominal de noir soit observé à l'écran du moniteur.

A l'étape suivante, on maintient le commutateur 11 dans la même position et on effectue un réglage du niveau de blanc nominal au moyen des modules de réglage de blanc 7 à 9. Pour effectuer le réglage de blancs, on envoie sur les trois entrées R, G, B du préamplificateur un signal calibré de 0,7 Vpic (délivré par un appareil appelé "mire de couleurs") correspondant à une image blanche.En d'autres termes, on ajuste le niveau de tension qu'il faut rajouter à celle qui permet d'obtenir le niveau nominal de noir pour obtenir un niveau nominal de blanc observé par la caméra couleur sur l'écran du moniteur.

A l'étape suivante, on change la position du commutateur 11 en isolant sa sortie 13 et en reliant électriquement la sortie du module de brillance 10 et la sortie 12. On injecte donc le signal de brillance nominal en amont des modules de réglage de blanc 7 à 9. Pour effectuer le réglage de noir, on envoie sur les entrées R, G, B un signal de OVpic, correspondant à une image noire. On effectue alors un nouveau réglage du noir nominal au moyen des modules de réglage de noir 20 à 22 et ce en raison du fait que le niveau de noir observé sur l'écran a été modifié en raison de l'injection du signal de brillance nominal en amont et non plus en aval des modules de réglage de blanc 7 à 9. L'étalonnage des couleurs est ici terminé et il n'est pas nécessaire de reprendre le réglage du niveau de blanc qui n'a pas été modifié et qui est conservé quelle que soit la valeur de brillance souhaitée. Ainsi, avec seulement trois étapes d'étalonnage, on obtient un résultat satisfaisant sans modification ultérieure de la couleur blanche affichée à l'écran lors de son utilisation.

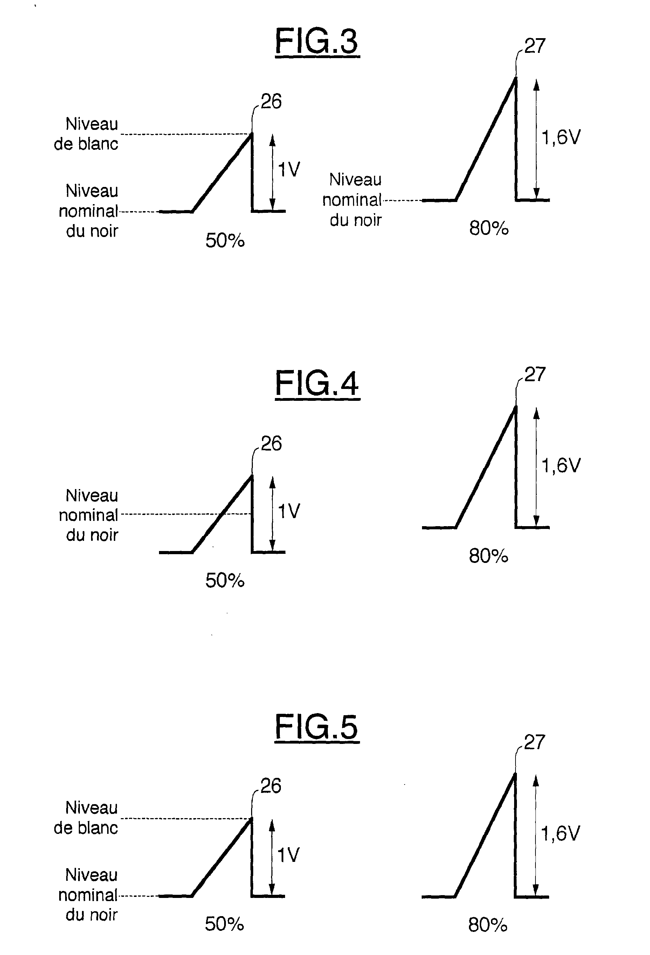

Sur la figure 3, on voit un signal 26 émis sur une voie d'un moniteur, en entrée dudit moniteur, et un signal 27 émis sur une autre voie, en entrée dudit moniteur, et ce, à la fin de la deuxième étape telle que décrite ci-dessus, c'est-à-dire après la première étape de réglage du noir et la deuxième étape de réglage du blanc avant commutation du commutateur 11. Le niveau nominal du noir correspond à une certaine tension et le niveau nominal du blanc a une tension plus élevée, la différence entre ces deux tensions n'étant pas identique entre les voies, avec par exemple 1 volt sur le signal 26 et 1,6 volt sur le signal 27. Le module de réglage de blanc est réglé à 50% pour le signal 26 et à 80% pour le signal 27.

Après commutation du commutateur 11, les signaux se trouvent dans l'état illustré sur la figure 4. Le coefficient de 50% du module de réglage de blanc qui traite le signal 26 a donc été appliqué audit signal 26, ce qui a provoqué son décalage vers le bas d'une valeur égale à 50% du niveau nominal du noir. Le signal 27 a été décalé vers le bas d'une valeur correspondant à 20% du niveau nominal du noir, compte tenu du coefficient de 80% appliqué par son module de réglage du blanc.

La troisième étape, de réglage du niveau du noir, permet de rétablir un signal satisfaisant, comme illustré sur la figure 5.

Pour chaque voie, un module de réglagé du noir 20, 21, 22 de la figure 2, permet de rajouter la tension qui est nécessaire pour que le signal obtenu soit égal au niveau du noir souhaité, tel qu'observé sur l'écran du moniteur au moyen de la chaîne d'étalonnage qui est équipée d'une caméra.

L'invention permet d'obtenir un étalonnage rapide, donc économique, d'un moniteur vidéo en fin de chaîne de fabrication et ce, en mettant en oeuvre dans l'ensemble pré-amplificateur-amplificateur du moniteur des moyens électroniques simples constitués par un commutateur, permettant d'injecter un signal de brillance en amont ou en aval des différents modules de réglage de blanc.

Ainsi, par rapport à la première architecture selon l'art antérieur, l'invention permet à coût de dispositif et à coût de méthode d'étalonnage comparables, d'obtenir une image de qualité améliorée sur le moniteur.

Par rapport à la deuxième architecture selon l'art antérieur, l'invention permet, à qualité d'image constante, de réduire de façon considérable la durée de l'étalonnage, ce qui a une influence sur les coûts de fabrication.

## Revendications

1. Procédé de réglage de couleur d'un moniteur couleur pourvu d'un tube cathodique et d'un moyen de réglage de la brillance, dans lequel on envoie un signal de brillance nominal en aval d'un moyen de réglage de niveau de blanc et en amont d'un moyen de réglage de niveau de noir, on ajuste la tension nécessaire pour obtenir une image de couleur noire, on ajuste la tension nécessaire pour obtenir une image de couleur blanche, on envoie ledit signal de brillance nominal en amont dudit moyen de réglage de niveau de blanc, et on ajuste la tension nécessaire pour obtenir une image de couleur noire.

2. Procédé selon la revendication 1, dans lequel le tube cathodique étant pourvu d'une pluralité de voies, on procède auxdits ajustements pour chacune des voies.

3. Procédé selon la revendication 1 ou 2, dans lequel l'ajustement de tension nécessaire pour obtenir une image de couleur noire est effectué à la sortie d'un amplificateur faisant partie du moniteur.

4. Procédé selon la revendication 1 ou 2, dans lequel l'ajustement de tension nécessaire pour obtenir une image de couleur noire est effectué à la sortie d'un pré-amplificateur faisant partie du moniteur.

5. Procédé selon l'une quelconque des revendications précédentes, dans lequel l'ajustement de tension nécessaire pour obtenir une image de couleur blanche est effectué à la sortie d'un pré-amplificateur faisant partie du moniteur.

6. Procédé selon l'une quelconque des revendications précédentes, dans lequel on mesure la couleur de l'image.

7. Dispositif de réglage de couleur d'un moniteur couleur (2) pourvu d'un tube cathodique, comprenant un moyen de réglage de la brillance (10), un moyen pour ajuster la tension nécessaire pour obtenir une image de couleur noire (20, 21, 22) et un moyen pour ajuster la tension nécessaire pour obtenir une image de couleur blanche (7, 8, 9), caractérisé par le fait qu'il comprend un moyen de réglage de la brillance en amont du moyen pour ajuster la tension nécessaire pour obtenir une image de couleur blanche et un moyen de réglage de la brillance en aval du moyen pour ajuster la tension nécessaire pour obtenir une image de couleur blanche.

8. Dispositif selon la revendication 7, caractérisé par le fait qu'il comprend un unique moyen de réglage de la brillance apte à être actif alternativement en amont et en aval du moyen pour ajuster la tension nécessaire pour obtenir une image de couleur blanche.

9. Dispositif selon la revendication 8, caractérisé par le fait qu'il comprend un moyen de commutation (11) disposé à une sortie du moyen de réglage de la brillance (10) et capable de relier ladite sortie du moyen de réglage de la brillance alternativement à une entrée et à une sortie du moyen pour ajuster la tension nécessaire pour obtenir une image de couleur blanche.

10. Moniteur comprenant un dispositif selon l'une quelconque des revendications 7 à 9.
